# EUROPEAN PATENT SPECIFICATION

(11) **EP 1 638 033 B1**
(45) Date of publication and mention of the grant of the patent: **11.07.2012**
(21) Application number: 05019788.8
(22) Date of filing: 12.09.2005
(51) Int. Cl.: G06F 21/02

(54) **Self testing and securing RAM system and method**
Selbstüberprüfendes und sicherndes flüchtiges Speichersystem und Speicherverfahren
Système de mémoire volatile avec autovérification et sécurisation et procédé de mémorisation

(30) Priority: 20.09.2004 US 944990
(43) Date of publication of application: 22.03.2006
(73) Proprietor: Rockwell Automation Technologies, Inc., Mayfield Heights, OH 44124 (US)
(72) Inventor: Callaghan, David M., Concord Ohio 44077 (US)
(74) Representative: Grünecker, Kinkeldey, Stockmair & Schwanhäusser

(56) References cited:
- WO-A-02/071231
- DE-A1- 19 803 218
- US-A- 5 617 531
- US-A- 5 943 283

## Description

### TECHNICAL FIELD

The present invention relates generally to computer systems, and more particularly toward random access memory and ensuring the integrity and security thereof.

### BACKGROUND

Computer information technology continues to spread rampantly throughout our technological society. Moreover, the proliferation of such technology fuels a persistent demand for smaller and higher density storage devices. At present, computer technologies pervade many aspects ofmodem life in the form of portable devices such as PDA's, phones, pagers, digital cameras and voice recorders, MP3 players, and laptop computers to name but a few. Furthermore, behind the scenes, business and industry rely heavily on computers to reduce cost and produce products more efficiently. The fervent societal desire for omnipresent computing technologies ensures that the movement toward developing small, fast, low power, inexpensive, and high-density memory will continue into the distant future. To achieve such high densities, there has been and continues to be efforts in the semiconductor industry toward scaling down device dimensions (*e.g*., at sub-micron levels) on semiconductor wafers. In order to accomplish such high device packing density, smaller and smaller feature sizes are required. Devices fabricated with sub-micron feature sizes, however, have an increased likelihood of containing errors or contaminated data.

Popular volatile memory technologies such as dynamic random access memory (DRAM) and synchronous random access memory (SRAM) are known to be susceptible to both hard errors and soft errors. These small geometry or high-density memory cells are also more susceptible to data corruption from a variety of sources. Hard errors or faults occur when there is a physical failure in the digital circuitry, for example due to a problem in the design or manufacturing of a device or physical deterioration. Memory devices with hard errors experience consistently incorrect results (e.g., bit always 1 or 0). Soft errors or transient faults occur when charged particles such as alpha particles or cosmic rays penetrate a memory cell and cause a bit(s) to flip or change states. Memory disruptions caused by soft errors are quantified as a soft error rate (SER). Soft errors are somewhat random events. However, the SER can vary exponentially according to, among other things, the proximity of a device to a radioactive source and the altitude at which the device operates.

No matter what the type or cause, memory faults are generally unacceptable. In certain situations, a memory error that causes a bit to change states will be almost insignificant. For instance, if one bit in a single screen shot that appears for a spit second is off (rather than on), such an error will often go unnoticed. However, if a single bit is flipped in a router application it may mean the difference between a message going to Boston and a message going to San Francisco. Furthermore, small errors in military and mission critical systems could cause catastrophic damage to life and property.

To compensate for errors and improve the reliability of memory devices even as feature sizes decrease, a multitude of error detection and correction techniques need to be employed. However, utilizing conventional error detection and correction techniques can significantly impact system performance in part because the central processor in a computer system needs to be diverted from other processes to test and correct a memory device. Furthermore, the period of time that the processor is diverted from other processes varies Proportionally with the amount of memory utilized on a platform. This is problematic, as more and more software applications require an increasingly large amount of RAM to store and execute programs. Moreover, conventional systems only test the memory upon start-up, prior to booting a machine, thus delaying system startup in proportion with the amount of system RAM and ignoring errors the may arise during system operation.

In addition to errors, memory is also susceptible to security breaches. By way of example, an individual may download sensitive information for viewing via a web browser. In order to provide access to such information the browser will allocate space and load the information into RAM. Once in RAM, a user can view, change and otherwise interact with the data. After users are finished with the data, they close out of the browser program and thereby release the memory for use by other applications. However, the release of memory does not typically involve erasure of the memory contents. Hence, a malicious individual or program (e.g., driver, application...) could subsequently request a large portion of memory and read the contents of the memory written by a previous application. This is problematic when memory contents include private or sensitive information (e.g., bank account number, credit card number, user name, password...). Conventionally, in military applications, data is scrubbed by the operating system after an application is closed to eliminate this security risk. Essentially, ones and zeros are written to the memory, thereby overwriting the previous contents. However, this method is quite costly in terms of processing time as the central processor must be diverted from other processes to overwrite values to memory.

Moreover, memory is conventionally scrubbed only upon termination of a program or application instance. Hence, memory is incredibly vulnerable to attack during data processing and manipulation. In particular, it is possible that an application could tunnel through the process space into the memory and not only view the raw contents of RAM memory but also manipulate values therein to among other things control an application, produce erroneous results, and/or crash an application or the executing system.

Accordingly, there is a need in the art for an efficient system and method of ensuring the integrity and security of volatile memory threatened by, among other things, errors (e.g., hard and soft) and/or malicious attacks.
US-A-5 943 283 relates to address scrambling in a semiconductor memory. A memory includes an address scrambler that generates a physical address from an input logical address. The mapping is defined by a user-programmable key. The scrambler employs a variety of scrambling or encryption techniques when converting an input address to a physical address. The scrambler implements a one-to-one mapping. The scrambler contains a mixer. The mixer performs the one to one mapping of values. When only sequential address is required, the scramble generates a random series without the need of an input address. A pseudo random series generator can be used.

WO 02/071231 A1 relates to an arrangement for protecting data saved in a memory, in which arrangement at least one memory element and at least one data processing element are combined by means of required interfaces into a data processing entity. The arrangement comprises at least one scrambler connected to the data processing entity, which scrambler scrambles the form in which the data to be saved in the memory element is represented and/or decompresses data saved in the memory element into plain text when data is taken from the memory element for the user of the data processing elements.

DE 198 03 218 A1 discloses a memory having a central controller that is coupled to a host system and to a memory, e.g. a flash memory, EEPROM or hard disc. The controller has a host interface, central processor, sector buffer, bus controller, encoding/decoding processor circuits, error corrector and a memory control stage. The first processor circuit provides the controlled coding of the write and read modes.

It is the object of the present invention to enhance the security for mapped data.

This object is solved by the subject matter of the independent claims.

Preferred embodiments are defined in the dependent claims.

### SUMMARY

The invention provides a secure volatile memory system as defined in the appended claims.

### BRIEF DESCRIPTION OF THE DRAWINGS

Fig. 1 is a block diagram of a self-testing RAM system.

Fig. 2 is a schematic block diagram illustrating a solf-testing RAM device.

Fig. 3 is a schematic block diagram illustrating self-testing RAM device.

Fig. 4 is an illustration of a field programmable gate array employing self-testing RAM.

Fig. 5 is a schematic block diagram of a secure volatile memory system in accordance with an aspect of the subject invention.

Fig. 6 is a schematic block diagram of a security system.

Fig. 7 is a schematic block diagram of a data storage component.

Fig. 8 is a schematic block diagram of a digital rights component.

Fig. 9 is a flow chart diagram depicting a memory testing methodology.

Fig. 10 is a flow chart diagram illustrating a method of verifying a processor to memory interface.

Fig. 11 is a flow chart diagram depicting an error detection and correction methodology.

Fig. 12 is a flow chart diagram continuation of Fig. 11.

Fig. 13 is a flow chart diagram of a method of memory verification.

Fig. 14 is a flow diagram depicting a method of maintaining data integrity.

Fig. 15 is a flow chart diagram illustrating the method of writing data to a self-testing RAM device.

Fig.16 is a flow chart diagram of a secure method of storing data to memory.

Fig. 17 is a flow chart diagram of a memory location selection methodology.

Fig. 18 is a flow chart diagram of a methodology for retrieving data from memory.

Fig. 19 is a schematic block diagram illustrating a suitable operating environment for use of the present invention.

### DETAILED DESCRIPTION

The present invention is now described with reference to the annexed drawings, wherein like numerals refer to like elements throughout. It should be understood, however, that the drawings and detailed description thereto are not intended to limit the invention to the particular form disposed. Rather, the invention is to cover all modifications, equivalents, and alternatives falling within the scope of the present invention.

As used in this application, the terms "component," "system," and "interface" are intended to refer to a computer-related entity, either hardware a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers.

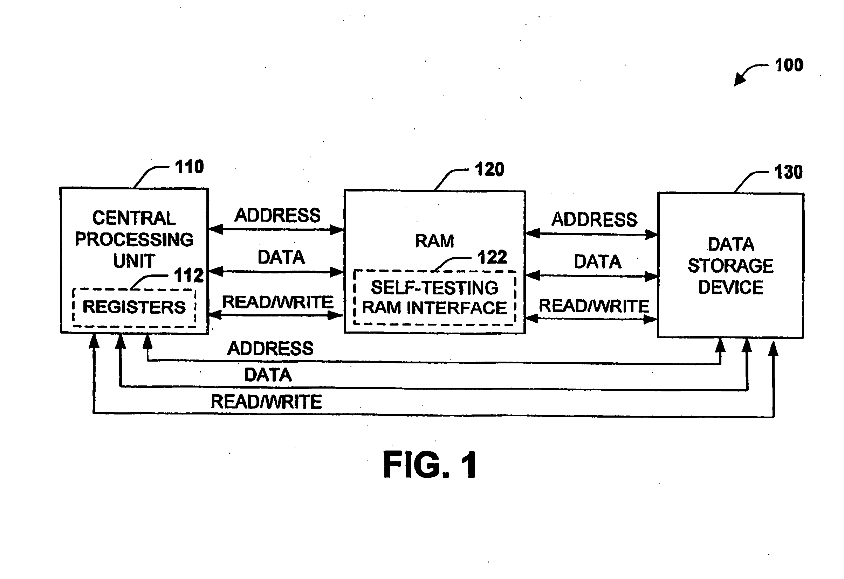

Turning initially to Fig. 1, a self-testing RAM system 100 is illustrated. System 100 comprises a central processing unit (CPU) 110, registers 112, random access memory (RAM) 120, self-testing RAM interface 122, and data storage device 130. The CPU 110 has registers 112 within the chip or in close proximity thereto to provide very fast-localized cache memory (e.g., L1, L2) to the processor. CPU 110 is connected via address lines and data read/write lines to RAM 120 and data storage device 130. The CPU 110 can receive data or instructions by specifying an address on the address line and receiving the data or instructions on the data read/write line. Typically, the CPU will first request the data from RAM 120 (if the data is not already in the CPUs registers) because the data is available faster on RAM than on a data storage device 130. However, if the data is not currently stored in RAM 120, the processor will request and received the data from data storage device 130. A similar type of process can be employed by the CPU 110 during a write operation. During a write operation, the CPU 110 can write data to one or both of RAM 120 and data storage device 130. RAM 120 generally corresponds to random access memory as is known in the art. RAM 120 is one level lower on the memory hierarchy than CPU cache memory and stores copies of data stored from CPU registers 112 and/or memory device 130 to facilitate high-speed data access. Furthermore, it is to be appreciated that RAM 120 includes all types of random access memory including but not limited to dynamic random access memory (DRAM), static random access memory (SRAM), synchronous dynamic RAM (SDRAM), Rambus DRAM (RDRAM), extended data-out DRAM (EDO RAM), double data rate SDRAM (DDR SDRAM), enhanced SDRAM (ESDRAM), Synchlink DRAM (SLDRAM), direct Rambus RAM (DRRAM), video RAM (VRAM), magnetic RAM (MRAM), and ferroelectric RAM (FRAM). Unlike conventional RAM devices, however, RAM 120 contains self-testing RAM interface 122. Self-testing RAM interface 122 can perform a variety of different tests *via* hardware, software, or a combination thereof to determine the existence of an error (*e.g*., hard or soft) in RAM 120 and correct or compensate for such an error if found. Self-testing RAM interface 122 can be an autonomous component or it can interact and collaborate with CPU 110 to test the RAM 120. Error testing (described in detail *infra*), can include testing prior to or simultaneous with initiation of a boot procedure such as writing a pattern to RAM 120 and reading each memory cell or a subset of memory to ensure bits are properly stored. Error testing can also be performed continuously with system operation. One example of such test would be verifying that the data copied to RAM 120 from storage device 130 or registers 112 has been copied or written correctly. Data storage device 130 is typically a rung down the memory hierarchy from RAM 120. For purposes of this specification, data storage device 130 is intended to correspond to a device for storing large quantities of data. Typically, data storage device 130 is a disk drive, however this invention is not so limited and can include any an all high-density data storage devices (*e.g*., flash, organic memory media...). Futhermore, it should be noted that the data storage device can be other RAM devices.

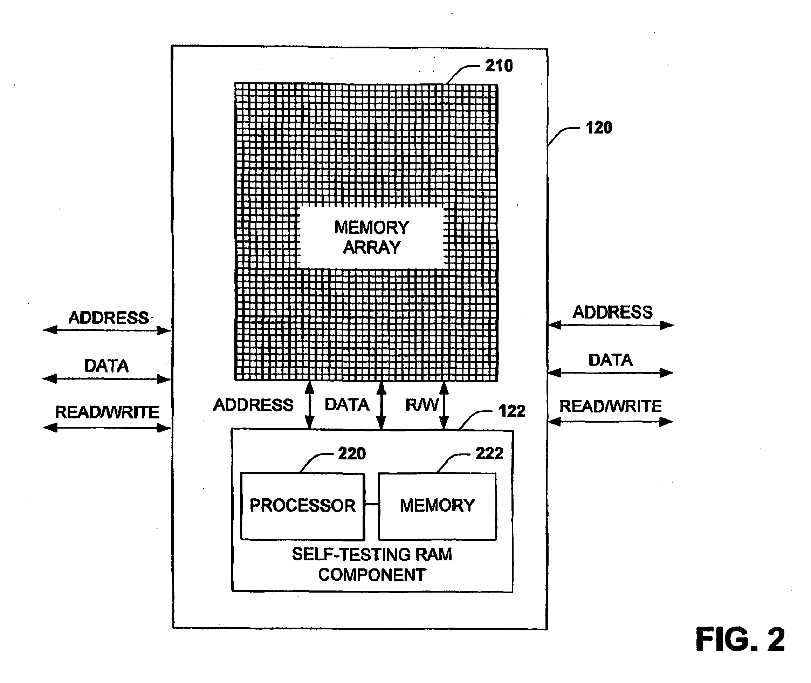

Fig. 2 is a schematic block diagram illustrating self-testing RAM device 120. RAM 120 includes memory array 210, self-testing RAM interface component 122, processor 220, and memory 222. Memory array 210 stores a multitude of data bits in a two dimensional matrix of cells such that the bits are addressable by row and column (a/k/a bit line and word line). Accordingly, to write a memory cell a processor (e.g., CPU or processor 220) can activate a column and apply a charge to a desired row. To read a memory cell the processor can select a column and detect the charge at a particular row. If there is no charge, the bit can be expressed as a 0 and if there is a charge above a certain threshold, the bit can be expresses as a 1 or vice versa. Furthermore, a memory array can contain additional bits of memory that are not used for data storage but rather for error detection and/or correction (e.g., parity bits, hamming code bits...). Self-testing RAM interface 122 comprises a processor 220 in accordance with the present aspect of the invention. Processor 220 can be embedded within RAM 120 and adds intelligence and control to a RAM 120, which conventionally is a simple passive device. Processor 220 is associated with memory 222. Processor 220 employs memory 222 to facilitate program execution for instance by storing program variables, programs, and/or data. Memory 222 can be an additional memory located within self-testing RAM interface 122 (as shown), such as processor cache memory. Memory 222 can be implemented with larger geometry features, for example, which make it less susceptible to hard or soft errors than memory array 210. Alternatively, memory 222 can be located in memory array 210 or external to the RAM 120 (*e.g*., on a disk drive, flash memory...). Furthermore, it should be noted that processor 220 can be utilized to execute a plurality of error detecting and correcting algorithms to increase the reliability of the data stored in RAM 120. Still further yet, it should be appreciated that the components implementing the STRAM subsystems of 122 (Figs. 1, 2, and 3) can be implemented using much faster technology components than conventional devices of 340,342,344, such as Gallium Arsenide vs. standard silicon based devices respectively. According to one aspect of the present invention, processor 220 can load a bit pattern (*e.g*., checkerboard) in the memory array 210 and verify that each cell contains the expected bit. Such a memory checking procedure can be employed on start-up of a computer system, for example. By enabling RAM 120 to test itself, a computer's CPU 110 is free to continue executing other tests and/or boot procedures thereby facilitating high-speed start-up with error checking. Furthermore, processor 220 need not operate solely by itself. The processor 220 can cooperate with the CPU 110 (Fig. 1) in running error-testing procedure. Thus, with respect to the above described memory testing procedure, the processor 220 and CPU 110 could divide the memory in half (or any other percentage), each writing and reading from one half of the memory to enable a comprehensive memory check to be completed more rapidly. Alternatively, the CPU register to RAM interface can be tested by loading a preconfigured pattern into registers 112 (Fig. 1) and writing them out to RAM 120. The processor 220 could subsequently verify whether the pattern written to RAM 120 is correct. Furthermore, the processor 220 can solely or in cooperation with CPU 110 execute conventional error correction code on the memory array 210, which is a task traditionally left to the CPU and an associated memory management component. In addition, processor 220 can execute a continuous data/address verification process while the computer system is running to improve RAM 120 reliability. Such a process (described in further detail below) can include reading data from memory array 210, retrieving a copy of the data from a data storage device such as a disk drive, or other RAM device, for example, and ensuring the data has been correctly stored in memory array 210 by comparing the data with a copy of the data store data corresponding address on the disk drive. Rather than accessing a disk to compare data, error detection could also be performed using a error correction code to determine whether the data has been correctly stored by referring to additional bits in memory array 210 that describe correct data (*e.g*., parity bits). Furthermore, it should be noted that if an error is detected the processor 220 can notify the CPU (*e.g*., bus fault, non-maskable interrupt, maskable interrupt) and/or correct or compensate for the error.

If an error is determined by the processor 220 to be a hard error (physically defective cell) such that the processor 220 cannot simply correct the erroneous data, then the processor can compensate for the memory error. Compensating for an error can be accomplished by mapping the erroneous cell or group of cells to a new location. For example, processor 220 can receive and/or dedicate a certain quantity of memory in memory array 210 to be used to compensate for bad cells, which cannot consistently and reliably store data. The processor 220 can maintain a list of bad cells and their new mappings such that if such memory address is requested by the CPU 110 the CPU can be, according to one exemplary aspect, rerouted to the new location of the desired memory.

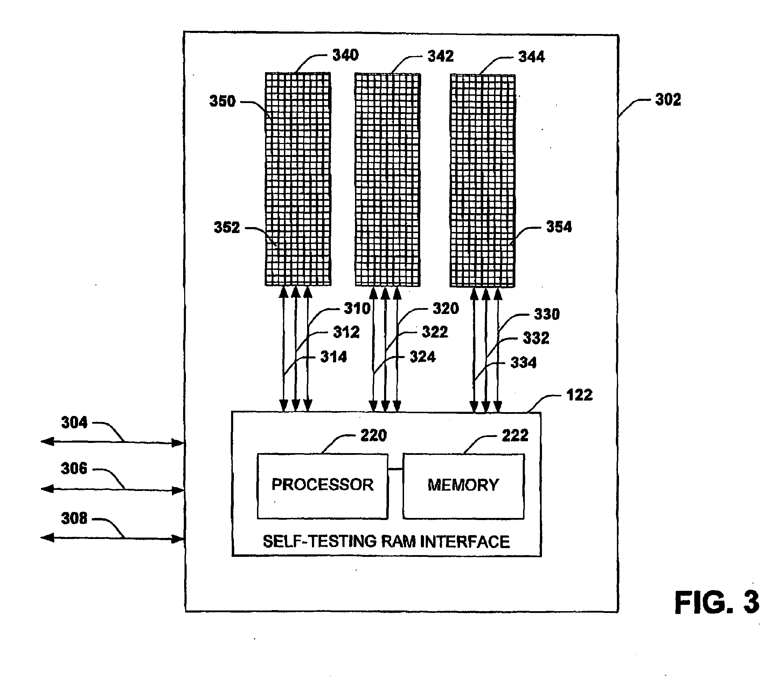

Fig. 3 is a block diagram depicting a standalone self-testing RAM (STRAM) self-validating (SVRAM) device 302. Device 302 comprises address line 304, data bus 306, read/write line 308, self-testing RAM interface component 122, processor 220, memory 222, address lines 310, 320, and 330, data buses 312, 322, and 332, read/write lines 314, 324, and 334, memory stores 340, 342, and 344, and memory cells 350, 352, and 354. Self-testing RAM interface 122 includes processor 220 and memory 222. Processor 220 employs memory 222 to facilitate program execution for instance by storing program variables, programs, and/or data. Memory 222 can be an additional memory located within self-testing RAM interface 122 (as shown), processor cache memory, or memory 222 could be external to the processor 220 and self-testing RAM interface 122. Furthermore, it should be appreciated that memory 222 can be implemented with larger geometry features, for example, in order to make it less susceptible to hard or soft errors than internal memory stores 340, 342, and 344. Still further yet, it should be appreciated that the components implementing the STRAM subsystems of 122 (Figs. 1, 2, and 3) can be implemented using much faster technology components than conventional devices of 340, 342, 344, such as Gallium Arsenide vs. standard silicon based devices respectively. Self-testing RAM interface 122 can be electrically connected to the address line 304, data bus 306, and read/write control line 308 of a typical central processing unit (CPU) 110 (not shown). The CPU 110 can make requests to read/write data through the interface provided by 304, 306, and 308 as it would with conventional RAM devices. When the self-testing RAM interface 122 receives the address read request via address line 306 and read/write line, for example, it can internally decode this request using processor 220 and memory 222. The processor 220 and the memory 222 can then provide the mechanism to drive a multitude of address lines 310, 320, and 330, data busses 312, 322, and 332, and read/write control 314, 324, and 334 associated with a plurality of memory arrays or stores 340, 342, and 344. The memory stores 340, 342, and 344 provide storage for one or more copies of the data in different locations providing robustness against radiation induced soft errors for example. Self-testing RAM interface 122 can then gather mapped data from cells 350, 352, and 354, for instance, and perform ECC computations to validate the data to be placed on data bus 306 to be transferred to a requesting CPU. As illustrated, device 302 is comprised in part of address line 304, data bus 306, read/write line 308 as separate entities, the quintessential Harvard architecture, separate data and address busses. However, it should be appreciated that device 302 of Fig. 3 can also include other address/data bus architectures, such as the Von-Newman bus architecture, which is a multiplexed data and address bus.

Self-testing RAM interface 122 can be employed as a virtual memory manager and a memory paging mechanism. Accordingly, it should be noted that during initial system startup while self-testing RAM interface 122 is testing the memory of memory store 344, self-testing RAM interface 122 can map all address/data accesses by the CPU 302 to memory cells provided by memory stores 340 and 343 which are not in the process of being tested. Thus, the actual amount of physical storage may therefore increase moments after system startup as the additional memory stores come online. Self-testing RAM interface 122 can also perform RAM cell testing without CPU 302 interventions by mapping all present live data and address line 304 and data bus 306 access to memory stores 340 and 342 while using self testing RAM interface 122 to test the memory cells such as cell 354 in memory store 344.

Furthermore, it is to be appreciated that self-testing interface 122 can be employed to support multiple or dual port access. Dual-port access refers to the ability of a memory device to support simultaneous read and write access to the memory. According to an aspect, multiple instances of self-testing interface 122 can be run simultaneously to support multi-port memory access.

Existing RAM devices have a typical 1:1 mapping between address and data lines shown by address line 304 and data bus 306 and the respective mapping to a RAM device single storage medium represented by memory storage 340, 342, and 344. The employment of several memory locations and representative storage mediums to provide robustness of the data store is one of several aspects of the present invention.

According to yet another example the functionality of self-testing RAM interface 122 can be implemented as a standalone interface device, which provides a virtual mapping from a single address and data bus interface (304 and 305) to a multidimensional data store. Additionally, multiple location stores providing a more robust implementation contained by a plurality of memory stores 340,342, and 344 could be implemented using conventional existing RAM devices (*e.g*., single in-line memory module (SIMM) dual in-line memory module (DIMM)...). Moreover, the memory stores 340, 342, and 344 can contain internal flaws that would conventionally be rejected for use in any system. The redundancy and defective cell remapping creates a non-zero utility value for these otherwise useless devices. For example, assume that two 256 MB RAM devices each have 50% defective row/column errors found during a manufacturing test. Legacy systems could not use these devices unless the faults were contiguous. However, the self-testing and self-validating system can utilize the self-testing RAM interface 122 to provide nearly 256 MB of combined functional RAM. Therefore, the added value of self-testing RAM interface 122 allows existing CPU architectures to use lower yield RAM devices that would currently be rejected and discarded.

In addition, the functionality provided by self-testing RAM interface 122 can be implemented in several manners in accordance with various other aspects of the subject invention. First, self-testing RAM interface 122 can be implemented employing a processor 220 and a memory 220 as described supra. Alternatively, the processor and memory could be replaced with logic comprising any means of embedding autonomous self-testing and/or cooperative testing onto RAM 120 or 302. Example of such logic include but are not limited to gate arrays, integrated circuits, and firmware. Furthermore, the self-testing RAM interface 122 could be implemented as an advanced memory interface in a CPU (*e.g*., SoC (System on Chip) design. Still further yet, it should be appreciated that the interface components of STRAM devices 120 and 302 (Figs. 1,2, and 3) can be implemented using Gallium Arsenide technology rather than standard silicon based technology to provide much faster operation than conventional devices.

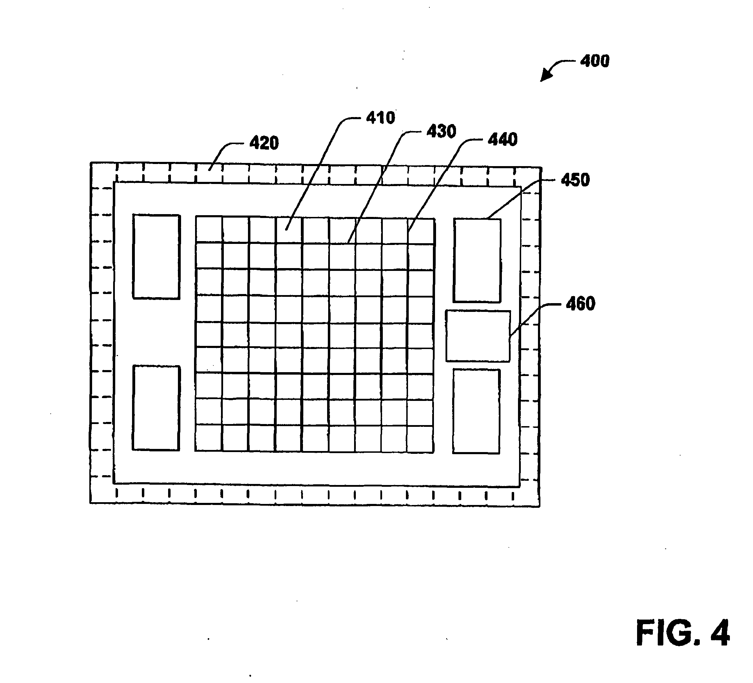

Fig. 4 illustrates a block diagram of an alternative system environment. Self-testing RAM can be employed where ever and at any level of technology where RAM is utilized. Fig. 4 depicts a field programmable gate array (FPGA) 400. FPGAs are digital integrated circuits that may be programmed by a user to perform logic functions. FPGA 400 includes an array of configurable logic blocks (CLBs) 410 that are programmably interconnected to each other and to programmable input/output blocks (IOBs) 420. The interconnections are provided by an interconnect array represented as horizontal and vertical interconnect lines 430 and 440. This collection of configurable elements and interconnects can be customized by loading configuration data into the FPGA via RAM blocks 450 which define how the CLBs, interconnect lines, and IOBs will function. The configuration data can be read from memory (*e.g*., an external PROM) or written into FPGA 400 from an external device (*e.g*., computer). An interesting aspect of FPGAs is that that are reprogrammable at least because the CLBs employ static RAM cells. In accordance with an aspect of the subject invention, it should be appreciated that FPGA 400 can also include self-testing RAM interface 460, which can be utilised to test CLBs 410, and RAM blocks 450 for errors and improve the overall reliability of FPGA 400. In one instance, self-testing RAM interface 460 can read and write data to memory cells prior to programming to ensure proper functioning of all memory cells. Self-testing RAM interface 460 can also be employed in another instance to verify stored data is correct by utilizing a plurality of error detection and correction algorithms and/or retrieving copies of the data to compare with the stored data.

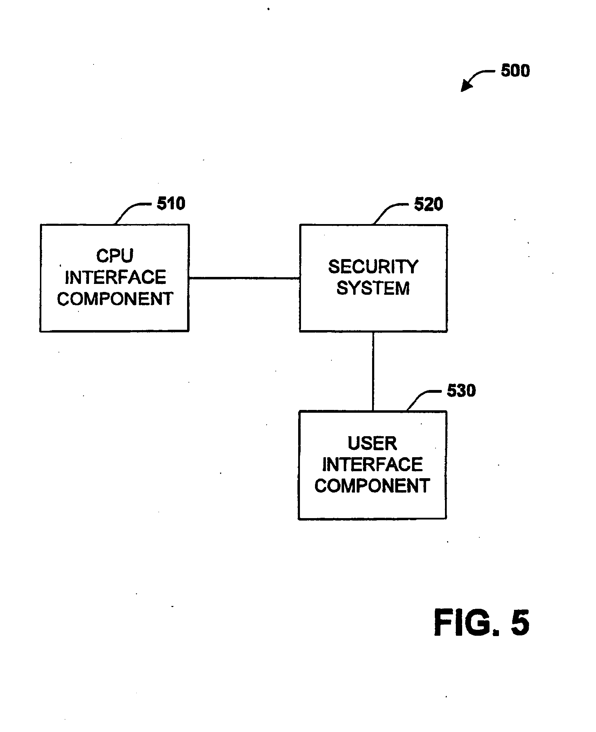

Turning to Fig. 5, a secure volatile memory 500 is illustrated in accordance with the subject invention. System 500 can operate alone or in combination with the self-testing system described *supra*. In accordance with an aspect of the invention, the system 500 can be executed by the self-testing RAM interface component 122 (Figs. 1,2 and 3) and in particular by the processor 220 in conjunction with the memory 222. System 500 includes a central processing unit (CPU) interface component 510, a system 520, and a user interface system 530.

The CPU interface component 510 retrieves and satisfies read/write requests by the central processor. In other words, the CPU interface component 510 facilitates communication between the central processor and the security system 500. For example, the CPU can send and the CPU interface 510 can receive addresses, data, and read/write information. Thereafter, the CPU interface component 510 can utilize such information to write data to memory or retrieve data and provide it to the request processor. Security component 520 can receive and provide information to and from CPU interface component 510.

Security component 520 ensures the security of the data stored in memory. In particular, it utilizes one or more mechanisms to protect data from passive and active attacks. Passive attacks involve eavesdropping or monitoring memory contents. For example, a passive attack may seek to retrieve sensitive or confidential information stored in RAM (*e.g*., bank account number, social security number, user ids and passwords...). Active attacks involve, among other things, the modification of data. For example, a malicious hacker could access a computer's RAM and change the contents thereof thereby producing a false result. , The false result could cause the executing computer to crash or possibly function in an undesired and/or dangerous manner. In the industrial control environment, this could which could cause disastrous effects to property and/or human life. As will be described *infra*, some mechanisms that can be employed by security component 520 include but are not limited to encryption, authentication, and other mechanisms to obscure data to make it difficult to decipher. Security system 520 can optionally interact with a user interface component 530.

User interface component 530 provides a mechanism for, among other things, identifying a user and/or specifying the security information. According to one aspect of the invention, a smart card and/or other means or mechanisms (*e.g*., biometrics) can be employed to identify an authorized user and provide security information. For example, the smart card can include a key that is utilized to encrypt and decrypt data. Additionally or alternatively, the smart card or other identifying means or mechanisms can specify the manner in which data is stored as well as the type of encryption and/or hash for use in authentication. All such information can be received by the user interface component 530 and provided to the security system 520. Memory security can then be affected or dictated by input provided by users. By way of example, a computer application could prompt a user to input identifying information for instance *via* a smart card or fingerprint or retina scanner. A key associated with the identified individual can then be located and utilized by the RAM interface 122 to encrypt data prior to storing it to memory and decrypt data before providing it to a requesting CPU. This is advantageous at least became it provides volatile data security without burdening the CPU with such a task.

Furthermore, it should be appreciated that alternatively or in addition to a key provided by a user via user interface component 530, the CPU can provide a key or signature to the security *via* CPU interface component 510. For instance, a CPU and/or operating system can generate and transmit a unique signature of the task or process context to the security system 520 as a key to the process currently interacting (*e.g*., reading, writing) with tho RAM. Subsequently, access to memory contents can be limited to a process or processes with the same context or key. Consequently, contextually related processes can interact with data while prohibiting interaction by rogue processes.

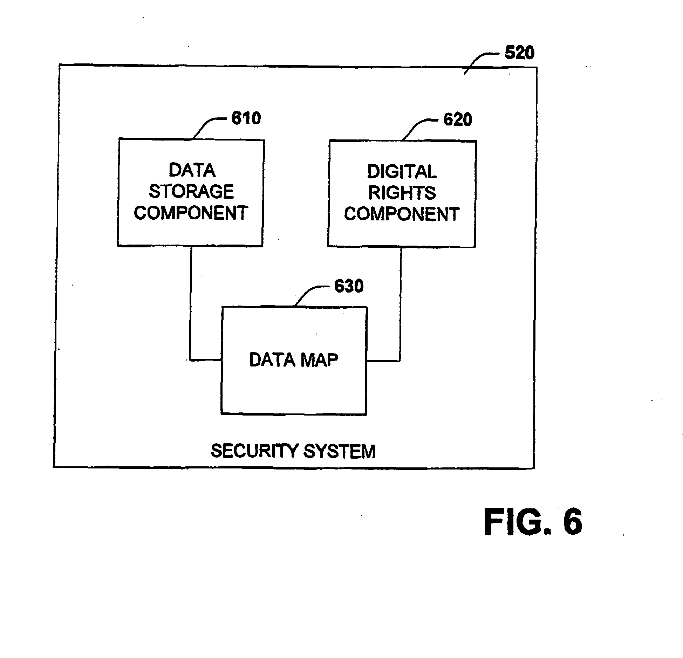

Fig. 6 depicts a security system 520 in accordance with the subject invention. As mentioned previously, the security system 520 provides a means and mechanism for ensuring volatile data security. In other words, security system 520 is in place to thwart or otherwise prevent successful attacks on random access memory. Security system 520 can include data storage component 610, digital rights component 620 and data map 630. Data storage component 610 controls the manner in which date is stored to memory. Conventionally, the central processing unit provides date to be written to a particular memory address and passive RAM devices receive and store such data. Furthermore, the memory addresses specified by the central processor are likely contiguous for related data. This conventional approach is vulnerable to both active and passive attacks by backers and/or malicious code. For example, the contents of the memory could be captured by another program and utilized to discover and/or modify sensitive or confidential information. The data storage component 610 can receive data and addresses from the CPU and map them, utilizing data map 630, nonlinearly to memory cells. In essence, the data storage component 610 can map related data to non-contiguous cells to deter or increase the difficultly of interpreting stored data. Thus, when a CPU desires to store data in RAM it provides such data and an address to the security system 520 via CPU interface component 510 (Fig.5). That address is then mapped to a different noncontiguous memory address. When that data is to be retrieved by the CPU the address is specified and inputted into a data map 630 to determine the actual memory address of the data. That memory address can then be read and the data subsequently provided to the CPU. Digital rights component 620 provides a mechanism for, *inter alia*, encrypting volatile memory data. Digital rights component can receive data from the CPU and subsequently encrypt such data for storage to memory, for example via the storage component 610. Both the storage management component 610 and the encryption component 620 can be employed by a RAM interface 122 to facilitate secure storage of data without diverting the processor for such tasks. Finally, it should be appreciated that in a system employing CPU and/or operating system task or process context information, the unique signature or key can be employed to determine RAM access rights in collaboration with the data map component 630.

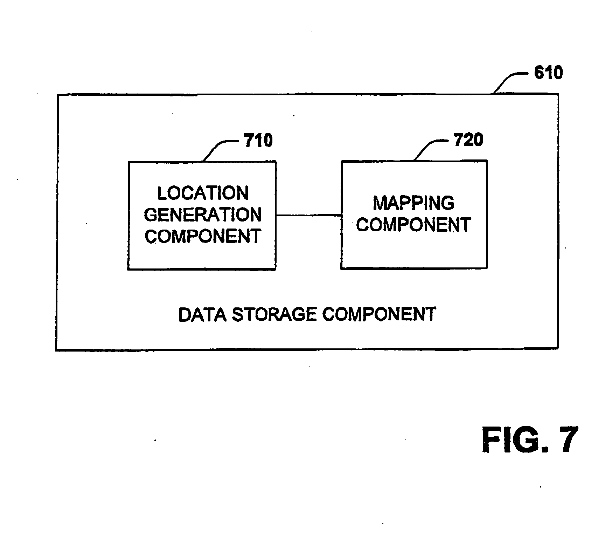

Fig. 7 depicts a data storage component 610 in accordance with the subject invention. Data storage component 610 includes a location generation component 710 and a mapping component 720. Location generation component 710 determines locations for storage of data. In particular, the component can scramble data throughtout one or more memory arrays to make it difficult to combine date segments to determine the meaning therof. Storage locations can be determined by utilizing any number of means. For instance, a pseudo random address generator can be utilized which produces random number that directly or indirectly corresponds to the address that data should be stored. Alternatively, a pattern for data storage can be employed. According to aspects of the invention the manner of data storage can be specified by particular user via a user interface component 530 (Fig. 5) or by a CPU or operating system process employing CPU interface component 510 (Fig.5), for example. It should be appreciated that a certain portion(s) of memory may not be usable for data storage by the location generation component 710 as it can be reserved for use as alternate storage locations for cells with errors (as described supra). Once a memory location is generated by the location generation component 710, such data along with the CPU address can be provided to the mapping component 720. Mapping component 720 utilizes the data to populate a data map 630 (Fig 6) mapping the CPU address to the actual memory storage location address. The map 630 can be embodied in the form of a table or XML document, among other things. According to an aspect of the invention, this data map 630 is not exposed or accessible by other processes (*e.g*., unnetworked) to prevent deciphering of the storage locations and comprehension of the data stored therein. When the CPU desires to retrieve data from RAM, it can provide tho address and possibly a key to the data storage component 610 *via* CPU interface component 510 (Fig. 5). The data storage component 610 can then employ mapping component 720 to provide the actual storage address for the data utilizing the CPU address and the data map 630. Thereafter, data can be retrieved and provided to the CPU. It should be noted that the components of data storage component 610 can be implemented utilizing virtual and/or physical components.

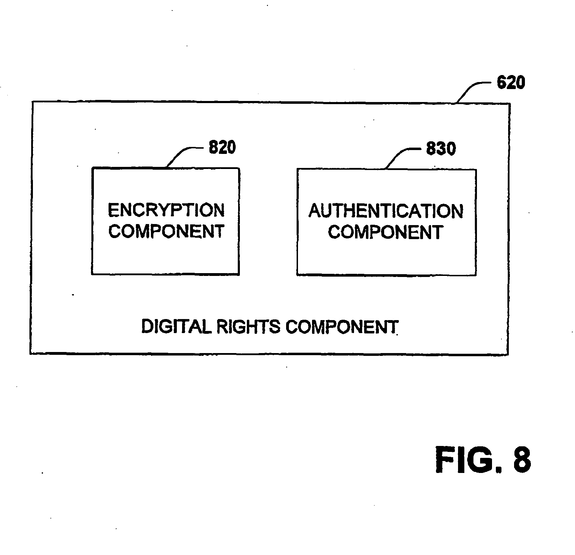

Fig. 8 illustrates a digital rights component 620. Digital rights component 620 ensures that only authorized individuals and/or programs have privileges to access and/or modify data stored in memory. Digital rights component 620 includes encryption component 810 and authentication component 820. Encryption component 810 can encrypt data that is stored to memory and decrypt data that is retrieved from memory. Thus, data stored in RAM can be stored in an encrypted form unable to be deciphered except by authorized users or entities. A private encryption key associated with a individual users, for example on a smart card, and can be received by the encryption component via the user interface component 530 (Fig. 5). Accordingly, the data portions can be encrypted and stored to RAM only to be accessible by a program upon receipt of the corresponding key that can be employed to decrypt the data. Hence, each byte or data portion can be encrypted rather than stored as plain text in the RAM. This prevents rogue applications from sniffing out interesting information from an un-initialized RAM and the operating system is free to skip the expensive software step of flushing (writing ones and zeros) released memory. Thus, a user could suspend his/her program and remove the key and no one could make any sense of the RAM contents until and unless the key was returned.

Authentication component 820 provides a mechanism to indicate whether data has been tampered with or changed. Component 820 can be employed alone or in combination with encryption component 810. According to one aspect of the invention, the component can employ a hash function on stored data portions to detect changes thereof. In essence, a hash function can be utilized to produce a digest when the data is stored to memory. The digest can be associated with the data portion in data map 630 (Fig. 6). Subsequently, the when the data is retrieved from memory the hash function can be applied to the data to produce a second digest. If the first and second digests are not equal then an error can be generated to indicate that data has been altered. Conventionally well known hash functions that can be employed in accordance with the subject invention including but not limited to MD5 (Message Digest 5 developed by Rivest) and SHA (Secure Hash Algorithm developed by the National Institute of Standards and Technology). Of course, the authentication component 830 can provide simpler mechanisms in addition to or as a substitute for the more complicated hash function. For instance, the authentication component 830 can employ redundancy checking where additional bits are used to detect changes in data. The bits can either be attached to the data itself or associated with the data via the data map 630. Furthermore, it should be appreciated that rather than first generating and error the authentication component could utilize information stored about the data to correct erroneous data, for example utilizing Hamming codes.

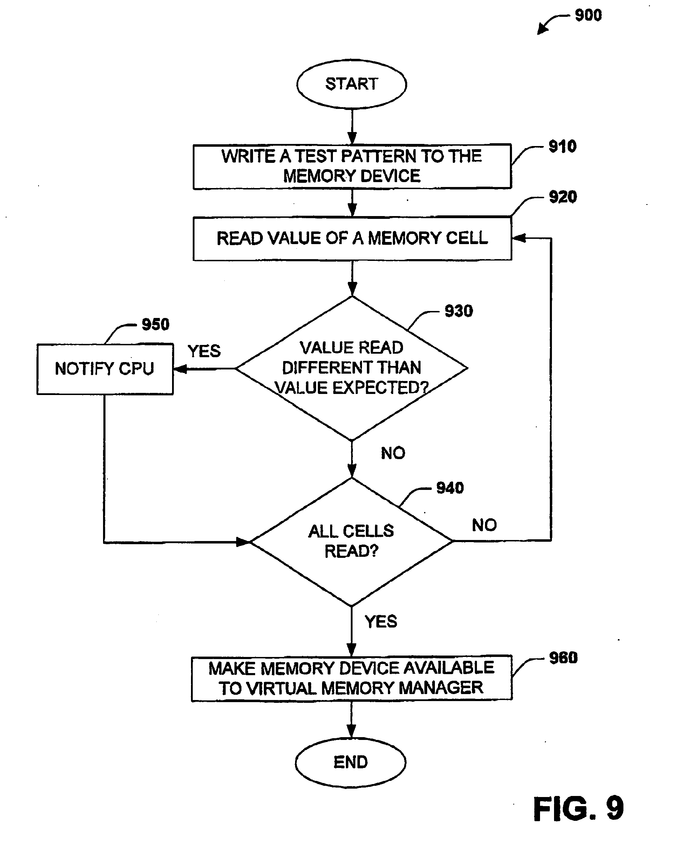

In view of the exemplary systems described supra, a methodology that may be implemented in accordance with the present invention can be better appreciated with reference to the flow charts of Figs. 9-18. While for purposes of simplicity of explanation, the methodology is shown and described as a series of blocks, it is to be understood and appreciated that the present invention is not limited by the order of the blocks, as some blocks may, in accordance with the present invention, occur in different orders and/or concurrently with other blocks from what is depicted and described herein. Moreover, not all illustrated blocks may be required to implement the methodology in accordance with the present invention.

Turning to Fig. 9, a methodology 900 for performing a memory test is depicted. Method 900 is employed upon system start-up so as to reduce the conventional start-up delay without having to forgo memory testing. At 910 a test pattern (*e.g.*, checkerboard, 10101010101) is written to all or part of a memory device (*e.g*., memory array 210) by a self-testing RAM interface 122. The test pattern can be stored within or generated by the self-testing RAM interface 122 (*e.g*., cache or memory) or retrieved from an external medium. At 920, a memory cell value is read by the self-testing RAM interface 122. Subsequently the value read is compared with the expected value, corresponding to the pattern written, to determine if the values are different at 930. If the value expected is not different than the value read then the process continues at 940. At 940, a determination is made as to whether an the cells in the tested memory have been read. If all the cells have not been read, the method proceeds to read another memory cell at 920. According to one exemplary method, this could be accomplished by incrementing the memory address read by one such that tho next contiguous memory cell can be read. Turning back to 930, if the value expected is different from the value read at 920 then the process continues at 950. At 950, the self-testing RAM interface 122 notifies (*e.g*., generating memory fault or interrupt) CPU 110 (Fig. 1) that an error the memory device exists. The CPU110 can then decide how to proceed. The CPU 110 may decide that the error is insignificant and ignore the notification. However, if the CPU 110 determines that the error is significant it could notify the user and either shut the system down, refuse to start a boot procedure, or refuse to continue with the boot procedure if it is currently being executed. After the processor is notified, the process continues at 940 where a determination is made as to whether all the memory cells have been read. If all memory cells have not yet been read the procedure continues at 920 where the next memory value is read. If all cells have been read then in accordance with an aspect of the invention the memory device or memory bank being tested is brought on line and made available to the RAM interface 122 functioning as a virtual memory manager as described *supra.* In addition, while this method has been described with respect to the self-testing RAM interface 122 performing all the testing it is to be appreciated that the CPU 110 and the self-testing RAM interface 122 could test the memory simultaneously to increase the overall speed of the testing procedure. For example, the CPU could test the first half of the memory while the self-testing RAM interface examines the last half of the memory.

If one wonders how a RAM subsystem can get ahead of the CPU execution, a simple explanation should suffice. Conventionally when a system boots the code to be executed is uncompressed from a nonvolatile storage location, which has much slower access than any of the RAM components. Therefore, while the soon to be executed applications and operating system is fetching from a slow disk drive subsystem or slow FLASH memory device, the sell-testing RAM subsystem can race away at burst read/write speeds testing and bringing online pages of RAM to supply the CPU requirements.

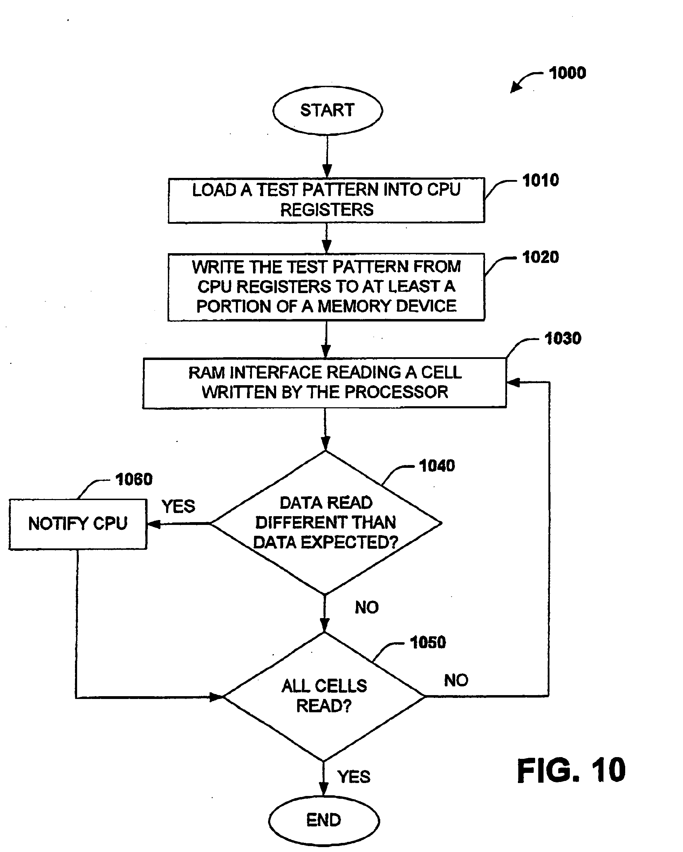

Fig. 10 is a flow chart diagram of a method 1000 for testing a processor to memory interface. At 1010, CPU registers are loaded with a preconfigured test pattern. The CPU then writes the test pattern to at least a portion of memory (*e.g*., pre-selected memory addresses), at 1020. At 1030, a self-testing RAM interface reads a cell written by the CPU* 110. The value is then compared with the value the self-testing RAM interface expected to read according to the preconfigured test pattern at 1040. If the value read is not different from the value expected then the process continues at 1050. If the value read is different than the value the self-testing RAM interface expected then at 1060 the CPU 110 is notified (*e.g*., bus fault, interrupt). The process continues at 1050 where a determination is made as to whether all the cells written by the CPU 110 have been read and verified or not. If all the cells have been read, the procedure terminates. However, if all the cells have not yet been read and verified then the process continues at 1030 where another cell written by the CPU

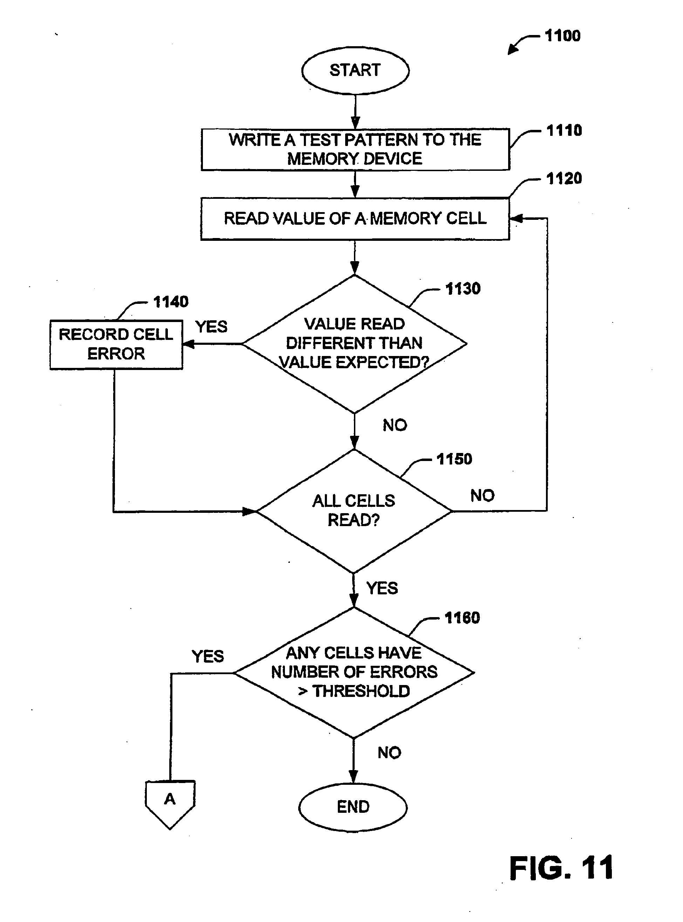

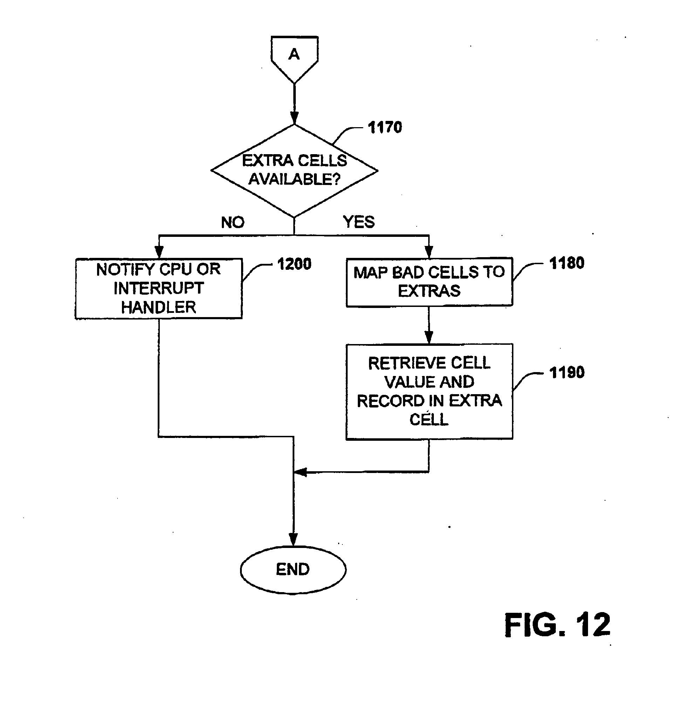

Fig. 11 is a flow chart diagram of a methodology 1100 for detecting and compensating for errors in a random access memory.
At 1110, the self-testing RAM interface 122 writes a data test pattern (*e.g*., checkerboard, 1010101010) to the at least a portion of a memory device. Next, a memory cell is read at 1120. Subsequently a decision is made as to whether the value read at a particular memory location corresponds to the value that was or should have been written to the location by the self-testing RAM interface 122 at 1110. If the value is different than expected the self-testing RAM interface 122 records in a table of errors the address of erroneous cell at 1140 or increments a counter associated with the address at which an error was detected and continues at 1150. If the value is not different than what was expected the process also continues at 1150. At 1150, a determination is made as to whether all the memory cells have been read. If no, then the address is incremented and the next memory cell is read at 1120. If yes, then the process proceeds to 1160 where a determination is made as to whether any cell has faulted more than a threshold number of times (*e.g*., more than once). This can be achieved by reviewing the table of errors and determining the number of times a cell has produced an error. Such a method enables the self-testing RAM interface to weed out hard errors that occur frequently, if not always, from soft errors that only occur occasionally. If no cells have produced errors more than a threshold number of times than the procedure terminates. If one or more memory cells have produced an error more than a threshold number of times the process continues at 1170 in Fig. 12. At 1170, a determination is made as to whether extra properly functioning memory cells are available. According to an aspect of the subject invention, a portion of memory in RAM can be set aside for error correction or compensation. If there are extra cells available then at 1180 the bad or contaminated cell address is mapped to one of the extra cells At 1190, the value of the bad cell is retrieved or corrected and written to the new location. The value of the bad cell may be retrieved utilizing a plurality of methods including but not limited to employing error correction code, retrieving the value form data storage, and retrieving it from CPU cache memory. If extra cells are not available then the CPU or alternatively an interrupt handler (*e.g*, busmaster/supervisory interrupt handler) is notified at 1200 and the procedure is terminated.

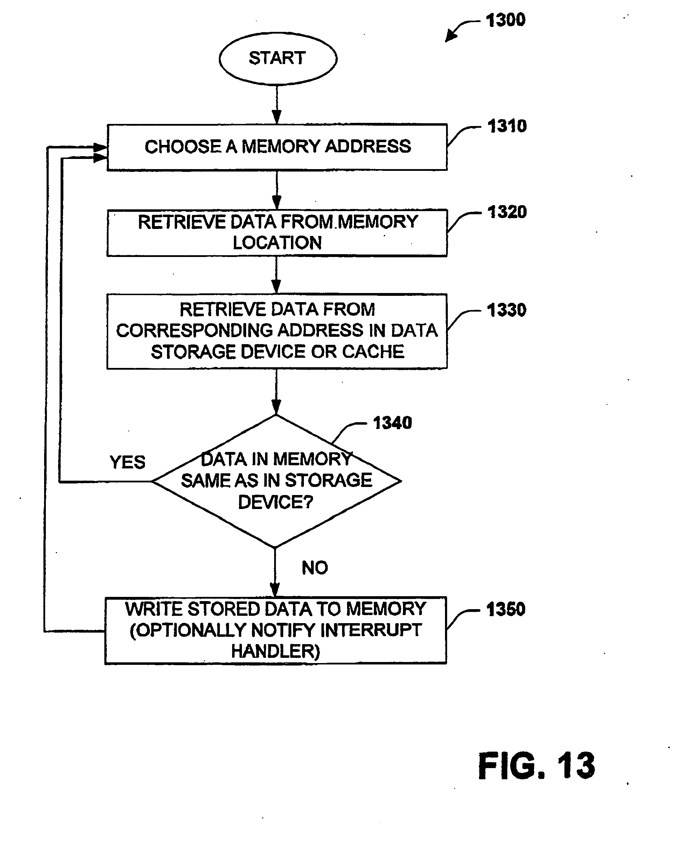

Turning to Fig. 13, a flow chart illustrating a method 1300 of memory verification is depicted. At 1310, a memory address is chosen by self-testing RAM interface 122 at random or according to a predetermined algorithm. Next, at 1320 data is retrieved from the memory location associated with the chosen address. Data corresponding to the chosen memory address is thereafter retrieved by the self-testing RAM interface 122 from a data storage device such as a magnetic disk drive or standard RAM device, or cache memory at 1330. Data retrieved from memory is then compared with data retrieved from the data storage device at 1340. If the data is the same then the memory is correct and the process proceeds to choose another memory address at 1310. If the data is different, at 1340 then memory integrity has not been maintained and the data from the storage device or cache is written to memory at 1350. In addition, at 1350, the CPU or an exception handler can be optionally notified of the storage error. Subsequently, the process continues at 1310 wherein another memory address is chosen for verification. Method 1300 can be run continuously during operation of a computer, intermittently when the memory is not being used, or alternatively at the direction of another component such as the CPU 110.

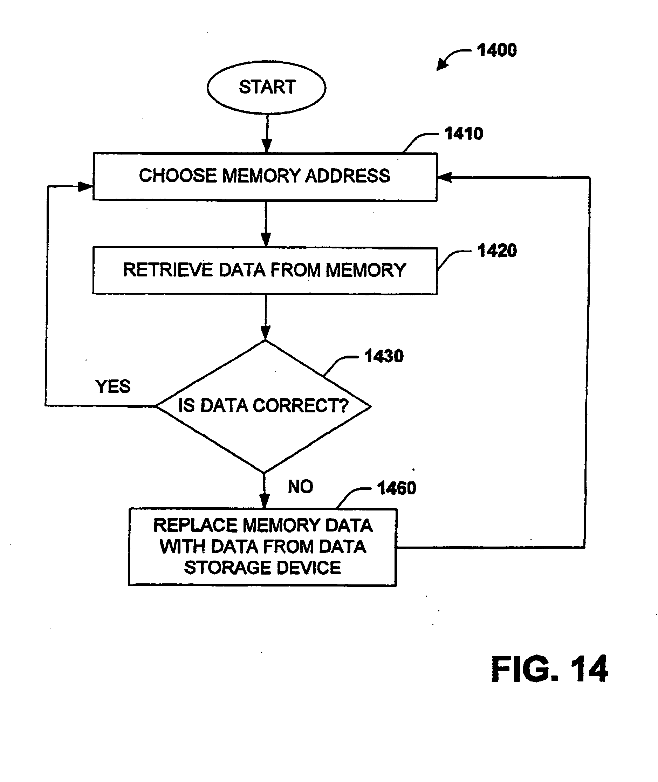

Fig. 14 is a flow diagram depicting a method 1400 of maintaining data integrity according to an aspect of the present invention. At 1410, self-testing RAM interface 122 chooses an address to test. Data is retrieved from the chosen memory location at 1420. It should be noted that 1420 is the address request to read a data value located at an address location. Thereafter, at 1430, it is determined whether the data is correct or not. The present invention changes step 1430 from what happens in a legacy system where data is typically retrieved from a single location and imperfect error detection is performed. In the present invention 1430 represents a new process where STRAM provides the physical storage abstraction that makes it possible for 1430 to decode the 1420 address location to actually read data from the possibly several discrete internally mapped addresses, each containing a separate copy or partial representations of the data that is delivered to a new type of ECC and voting mechanisms to determine the most probable data value which should be returned. It is this ECC and voting mechanism that occurs in 1430 based upon several stored copies of the data. The multiple copies in several locations provide more robustness against soft and hard failures than are provided by products known to the present art. Data validity can be checked utilizing additional bits associated with the data and error correction code. At 1430, the self-testing RAM interface implementing error correction code (ECC) determines whether the data is correct. If the data is correct, the process continues at 1410 where another address is chosen. If the data it incorrect, the ECC reveals the data error. Thereafter the method continues at 1410 when another address is chosen to be tested. If an error has been revealed the correct data is retrieved from a data storage device (*e.g*., RAM, disk drive...) or cache by self-testing RAM interface 122. The corrected data thereafter replaces the erroneous data at 1440, and the method proceeds to 1410 where another address is chosen to be tested.

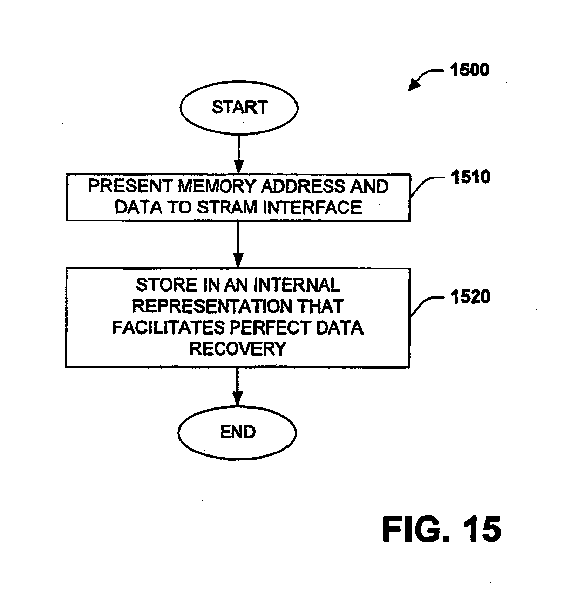

Turing to Fig. 15, a method 1500 of writing data to memory is depicted. At 1510, the data and address are presented at the STRAM interface. Subsequently, at 1520, the data and address are stored according to an internal data representation of the value that facilitates perfect data recovery, such as voting with multiple copies of the data and including ECC for each address written to by operation at 1520. Finally, it should be appreciated that the subject self-testing RAM device(s) support both reading and writing of memory for retrieval and storage of data respectively.

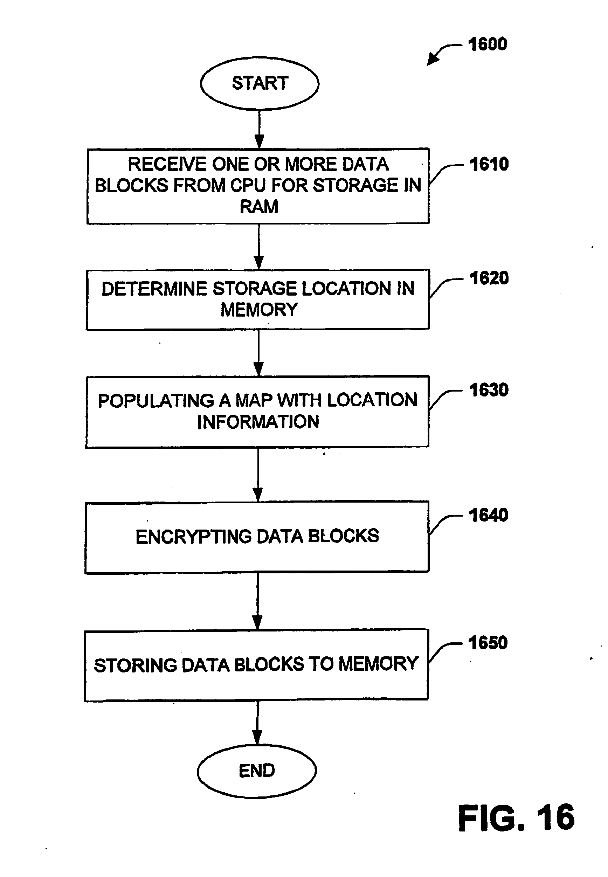

Fig. 16 depicts a method 1600 of securely storing data in memory in accordance with an aspect of the subject invention. At 1610, a request is received to store one or more blocks of data to memory. For example, the central processing unit can provide data and addresses for storage of the data in random access memory. Conventionally, the CPU would directly interact with a passive RAM device to store the data to the specific addresses in memory. However, at 1620, a determination is made as to which memory locations to store the provided data, According to an aspect of the invention, related data blocks should not be stored in contiguous memory cells all the time to further increase the difficultly of deciphering such data. To accomplish this task, the memory cells can be chosen at random from available memory locations. Thus, data can be randomly scrambled throughout one or more memory arrays. Simultaneously or after the data storage locations are determined, a map can be populated at 1630. The map can include, among other things, the address specified by the processor and the actual memory storage address. It should further be appreciated that data can be stored in particular locations, rather than simply randomly, utilizing algorithms corresponding to process context keys from the CPU and keys provided by a user. At 1640, each data block to be stored can be encrypted to provide a further level of data protection. The data can be encrypted such that the user of the application requesting such storage has the only key to decrypt such stored data. In other words, symmetric encryption standards can be employed. For example, a user can insert a smart card into the respective computer system, which contains the encryption algorithm to be employed to encrypt volatile memory (as well as the decryption key). Thus, a user could suspend a program and remove their card from the system and the data would not be able to be road until the user represents their card, and thus their key, to the system. Finally, at 1650, the encrypted data blocks can be stored to their determined locations.

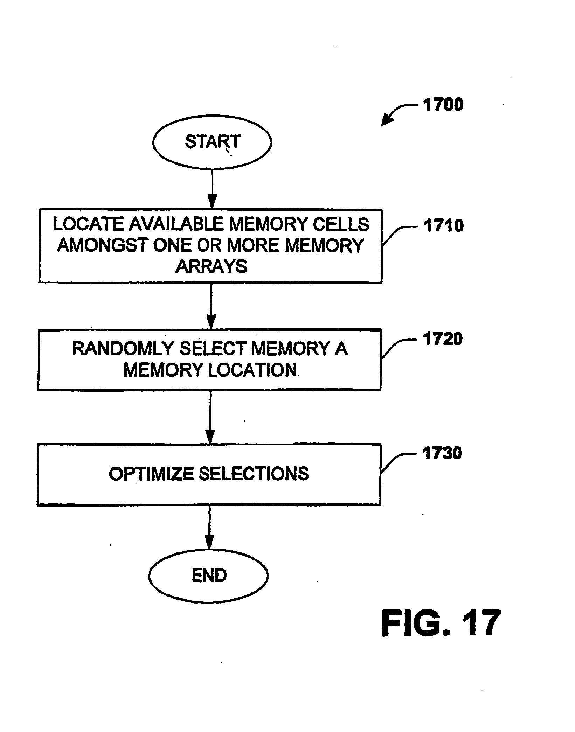

Fig.17 illustrates a memory location selection methodology 1700 in accordance with an aspect of the subject invention, At 1710, available memory locations on one or more memory arrays are located. Available memory locations can include those that are not currently storing data as well as those that are not reserved for compensating for hard and/or soft errors. At 1710, a memory location is chosen from amongst the available memory locations is chosen at random. More often than not, a plurality of memory cells will need to be accessed at one time for data storage or retrieval. Conventionally, related data is store in contiguous memory locations to facilitate efficient access thereto. Here, the present invention places a priority on security. Consequently, some efficiency is lost to that cause by ensuring that data is not stored in contiguous memory sections. In fact, by randomly generating locations memory sections can be selected sporadically from any available memory cell. This provides for optimum security. However, the subject invention recognized that this level of security might not be desired if it significantly decreases the time it takes to access data. According to one aspect of the invention, such a procedure can be executed by a RAM interface containing a separate processor for performing additional operations on stored data. Thus to some extent, the access time is mitigated. However, at 1730 optimization techniques can be employed to increase the efficiency of access as well as provide for a proper amount of data security. For example, one optimization technique could ensure that related data is stored in a single memory array of device rather than spreading it across multiple arrays and potentially increasing the access time.

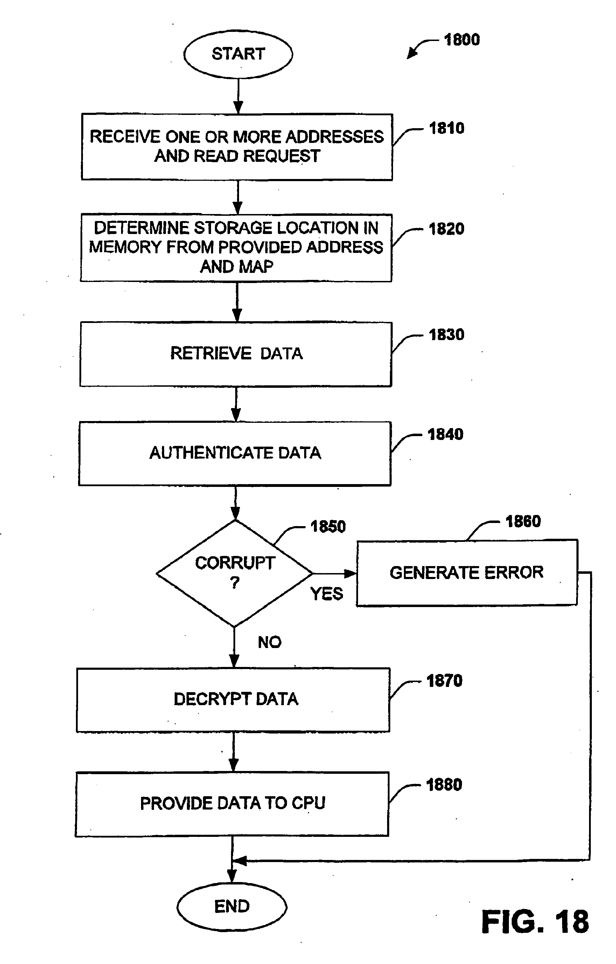

fig. 18 depicts a method of retrieving data from memory in accordance with an aspect of the subject invention. At 1810, a read request is received. For example, a CPU can request data from specific addresses in memory. At 1820, the storage location of data is determined based on provided addresses and a map of provided addresses to actual storage addresses. At 1830, data is read from the actual storage location. An optional authentication step can be performed at 1840. Authentication tests whether the stored data has been tampered with, corrupted, or otherwise changed since its storage by comparing it with information describing the data when it was stored. For example, this can be redundancy information such as parity bits or a hash digest. At 1850, a determination is made as to whether the data has been corrupted. This determination can be made by performing some operation on the data (*e.g*., hash function, party function) and comparing the results to stored results in the data map, for instance. If the data has been corrupted, then an error can be generated to indicate such, at 1860. The error can then prevent execution of corrupt data that could cause erroneous operations and/or disastrous effects depending on the application. However, the present invention also contemplates utilizing error correction techniques including but not limited to Hamming codes to correct errors, it possible, prior to generating an error at 1860. If an error is in fact generated at 1860 then the process terminates thereafter. It, however, the data was not corrupt then the data can be decrypted (if encrypted) at 1870. The decryption of the data can be enabled by receiving a key from the system user who affected the data store (*e.g*., program user). A smart card can be utilized to provide the key to the system. However, it should be appreciated that other means and mechanism are also deemed within the scope of the subject invention. Finally, at 1880, the data can be provided to the requesting CPU, for example.

Throughout this detailed description, communications between the CPU and self-testing and securing RAM interface have been described. Conventionally, the relationship between CPU and RAM has been one of master and slave since RAM is typically thought of as a passive device. The present invention introduces a active RAM device which can interact with the CPU to perform valuable testing and security functions. It should be appreciated that there are many manners in which CPU and RAM communications can be accomplished. For purposes of clarity and not limitation one such manner is introduced. Communications can be accomplished, for example, by programming the first n accesses to RAM from the CPU after reset to set up page sizes, region mapped by the CPU to RAM, encodings, encryption and so forth. STRAM can be a 256 MB 1:1 straight through 256MB RAM device by default. However, one can specify after a reset within x clock cycles to be a 1: 4 ratio (4 x redundancy voting RAM system) with only 64 MB of effective RAM. Additionally, a post window in the CPU address range can be utilized to communicate between the CPU and the RAM interface subsystem, where the CPU/operating system can write processor context registers, among other things, to apply.

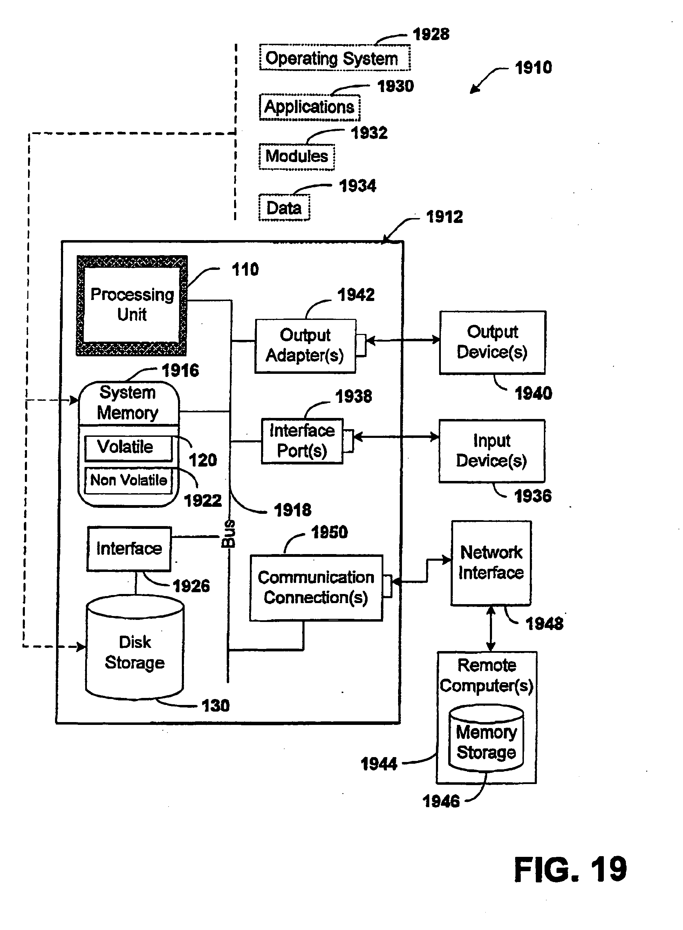

In order to provide a context for the various aspects of the invention, Fig. 19 as well as the following discussion are intended to provide a brief, general description of a suitable computing environment in which the various aspects of the present invention may be implemented. While the invention has been described above in the general context of computer-executable instructions of a computer program that runs on a computer and/or computers, those skilled in the art will recognize that the invention also may be implemented in combination with other program modules. Generally, program modules include routines, programs, components, data structures, etc. that perform particular tasks and/or implement particular abstract data types. Moreover, those skilled in the art will appreciate that the inventive methods may be practiced with other computer system configurations, including single-processor or multiprocessor computer systems, mini-computing devices, mainframe computers, as well as personal computers, hand-held computing devices, microprocessor-based or programmable consumer electronics, programmable logic controllers (PLCs) and the like. The illustrated aspects of the invention may also be practiced in distributed computing environments where task are performed by remote processing devices that are linked through a communications network. However, some, if not all aspects of the invention can be practices on stand-alone computers. In a distributed computing environment, program modules may be locate in both local and remote memory storage devices.

With reference to Fig. 19, an exemplary environment 1910 for implementing various aspects of the invention includes a computer 1912. The computer 1912 includes a processing unit 1910, a system memory 1916, and a system bus 1918. The system bus 1918 couples system components including, but not limited to, the system memory 1916 to the processing unit 110. The processing unit 110 (*e.g*., CPU) can be any of various available processors. Dual microprocessors and other multiprocessor architectures also can be employed as the processing unit 110.

The system bus 1918 can be any of several types of bus structure(s) including the memory bus or memory controller, a peripheral bus or external bus, and/or a local bus using any variety of available bus architectures including, but not limited to,11-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1916 includes volatile memory 120 and nonvolatile memory 1922. The basic input/output system (BIOS), containing the basic routines to transfer information between elements within the computer 1912, such as during start-up, is stored in nonvolatile memory 1922. By way of illustration, and not limitation, nonvolatile memory 1922 can include read only memory (ROM), programmable ROM (PROM), electrically programmable ROM (EPROM), electrically erasable ROM (EEPROM), or flash memory. Volatile memory 120 includes random access memory (RAM), which acts as external cache memory. By way of illustration and not limitation, RAM is available in many forms such as synchronous RAM (SRAM), dynamic RAM (DRAM), synchronous DRAM (DRAM), double data rate SDRAM (DDR SDRAM), enhanced SDRAM (ESDRAM), Synchlink DRAM (SLDRAM), and direct Rambus RAM (DRRAM).

Computer 1912 also includes removable/non-removable, volatile/non-volatile computer storage media. Fig. 19 illustrates, for example disk storage 130. Disk storage 130 includes, but is not limited to, devices like a magnetic disk drive, floppy disk drive, tape drive, Jaz drive, Zip drive, LS-100 drive, flash memory card, or memory stick. In addition, disk storage 130 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 130 to the system bus 1918, a removable or non-removable interface is typically used such as interface 1925.

It is to be appreciated that Fig 19 describes software that acts as an intermediary between users and the basic computer resources described in suitable operating environment 1910. Such software includes an operating system 1928. Operating system 1928, which can be stored on disk storage 130, acts to control and allocate resources of the computer system 1912. System applications 1930 take advantage of the management of resources by operating system 1928 through program modules 1932 and program data 1934 stored either in system memory 1916 or on disk storage 130. It is to be appreciated that the present invention can be implemented with various operating systems or combinations of operating systems.

A user enters commands or information into the computer 1912 through input device(s) 1936. Input devices 1936 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1914 through the system bus 1918 *via* interface port(s) 1938. Interface port(s) 1938 include, for example, a serial port, a parallel port, a game port, and a universal serial bus (USB). Output device(s) 1940 use some of the same type of ports as input device(s) 1936. Thus, for example, a USB port may be used to provide input to computer 1912, and to output information from computer 1912 to an output device 1940. Output adapter 1942 is provided to illustrate that there are some output devices 1940 like monitors, speakers, and printers, among other output devices 1940 that require special adapters. The output adapters 1942 include, by way of illustration and not limitation, video and sound cards that provide a means of connection between the output device 1940 and the system bus 1918. It should be noted that other devices and/or systems of devices provide both input and output capabilities such as remote computer(s) 1944.

Computer 1912 can operate in a networked environment using logical connections to one or more remote computers, such as remote computer(s) 1944. The remote computer(s) 1944 can be a personal computer, a server, a router, a network PC, a workstation, a microprocessor based appliance, a peer device or other common network node and the like, and typically includes many or all of the elements described relative to computer 1912. For purposes of brevity, only a memory storage device 1946 is illustrated with remote computer(s) 1944. Remote computer(s) 1944 is logically connected to computer 1912 through a network interface 1948 and then physically connected *via* communication connection 1950. Network interface 1948 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit-switching networks like Integrated Services Digital Networks (ISDN) and variation thereof, packet switching networks, and Digital Subscriber Lines (DSL).

Communication connections(s) 1950 refers to the hardware/software employed to connect the network interface 1948 to the bus 1918. While communication connection 1950 is shown for illustrative clarity inside computer 1912, it can also be external to computer 1912. The hardware/software necessary for connection to the network interface 1948 includes, for exemplary purposes only, internal and external technologies such as, modems including regular telephone grade modems, power modems, cable modems and DSL modems, ISDN adapters, and Ethernet cards.

What has been described above includes examples of the present invention. It is, of course, not possible to describe every conceivable combination of components or methodologies for purposes of describing the present invention, but one of ordinary skill in the art may recognize that many further combinations and permutations of the present invention are possible. Accordingly, the present invention is intended to embrace all such alterations, modification and variations that fall within the scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.
In summary a self-testing and correcting read only memory (RAM) device and methodology is disclosed herein. The device includes at least one array of memory to enable data storage and self-testing RAM interface for evaluating, correcting, and/or compensating for memory cell errors. The RAM device, *via* the self-testing RAM interface, supports interaction with a central processing unit (CPU) to facilitate testing of the CPU to memory interface as well as the device memory array. Furthermore, the subject invention provides for a system and method of securely storing data to volatile memory. More specifically, the RAM interface component can be employed to, among other things, store data in noncontiguous locations, encrypt/decrypt data as well as perform authentication checks to ensure the integrity of data and/or deter attacks thereon. All or significant portions of such functionality can be performed without burdening the CPU and affecting processing speed or efficiency.

## Claims

1. A secure volatile memory system comprising:
a CPU interface component (510) to receive and satisfy random access memory read/write requests from a central processor;
a security system (520) that securely stores and retrieves data from volatile memory in response to the requests received via the interface component; and
a user interface component (530);
wherein the security system (520) includes a data storage component (610) that maps related data to memory cells in a non-linear fashion; and
wherein the data storage component (610) maps data to memory cells in accordance with a process key and a user key, the process key being a key provided via the CPU interface component by a CPU and operating system, said process key being associated with a process context, and said user key being a key provided by a user via the user interface component (530).

2. The system of claim 1 wherein related data is stored in non-contiguous memory cells.

3. The system of claim 2, wherein the data storage component (610) includes a data location generator that generates pseudo-random locations to store related data.

4. The system of one of claims 1 to 3 wherein the security system (520) includes an encryption component (620) that encrypts data saved to one or more memory cells and decrypts data read from one or more memory cells.

5. The system of claim 4, wherein the encryption component (620) encrypts and decrypts data with a key provided by a user.

6. The system of claim 5, wherein the key is provided by a smart card.

7. The system of claim 4 or 5 wherein the security system further comprises an authentication component that verifies that data stored to the memory was not changed from the time it was stored to the memory to the time it was read.

8. The system of claim 7, wherein the authentication component employs a hash function to detect changes to the data.

9. The system of claim 8, wherein the authentication component utilizes a redundancy check to detect changes to the data.

10. The system of one of claims to 1 to 9, wherein the CPU interface component and the security system are associated with and/or executed by an interface embedded on a circuit board with one or more memory arrays.

11. The system of claim 10, wherein the CPU interface component and security system are executed by an interface that receives and controls one or more memory modules.

12. The system of claim 11, the interface includes a microprocessor.

13. The system of claim 11 or 12, the interface includes a memory component that facilitates execution of security protocols.

14. The system of one of claims 10 to 13, the interface is implemented with discrete logic.

15. The system of one of claims 10 to 14, the interface is implemented with SoC, System on Chip, technology.

## Patentansprüche

1. Sicheres flüchtiges Speichersystem, umfassend:
eine CPU-Schnittstellenkomponente (510) zum Empfangen und Erfüllen von Direktzugriffsspeicher-Lese-/-Schreibanforderungen von einem Zentralprozessor;
ein Sicherheitssystem (520), das Daten aus flüchtigem Speicher als Reaktion auf die über die Schnittstellenkomponente empfangenen Anforderungen sicher speichert und abruft; und
eine Benutzerschnittstellenkomponente (530);
wobei das Sicherheitssystem (520) eine Datenspeicherkomponente (610) umfasst, die verwandte Daten auf nicht lineare Weise auf Speicherzellen abbildet; und
wobei die Datenspeicherkomponente (610) Daten gemäß einem Prozessschlüssel und einem Benutzerschlüssel auf Speicherzellen abbildet, wobei der Prozessschlüssel ein Schlüssel ist, der über die CPU-Schnittstellenkomponente durch eine CPU und
ein Betriebssystem bereitgestellt wird, wobei der Prozessschlüssel mit einem Prozesskontext assoziiert ist und der Benutzerschlüssel ein Schlüssel ist, der durch einen Benutzer über die Benutzerschnittstellenkomponente (530) bereitgestellt wird.

2. System nach Anspruch 1, wobei verwandte Daten in nichtzusammenhängenden Speicherzellen gespeichert werden.

3. System nach Anspruch 2, wobei die Datenspeicherkomponente (610) einen Datenspeicherstellengenerator umfasst, der pseudozufällige Speicherstellen zum Speichern von verwandten Daten erzeugt.

4. System nach einem der Ansprüche 1 bis 3, wobei das Sicherheitssystem (520) eine Verschlüsselungskomponente (620) umfasst, die in eine oder mehrere Speicherzellen abgespeicherte Daten verschlüsselt und aus einer oder mehreren Speicherzellen gelesene Daten entschlüsselt.

5. System nach Anspruch 4, wobei die Verschlüsselungskomponente (620) Daten mit einem durch einen Benutzer bereitgestellten Schlüssel verschlüsselt und entschlüsselt.

6. System nach Anspruch 5, wobei der Schlüssel durch eine Smartcard bereitgestellt wird.

7. System nach Anspruch 4 oder 5, wobei das Sicherheitssystem ferner eine Authentifizierungskomponente umfasst, die verifiziert, dass in den Speicher gespeicherte Daten vom Zeitpunkt ihrer Speicherung in den Speicher bis zum Zeitpunkt ihres Lesens nicht geändert wurden.

8. System nach Anspruch 7, wobei die Authentifizierungskomponente eine Hash-Funktion verwendet, um Änderungen an den Daten zu detektieren.

9. System nach Anspruch 8, wobei die Authentifizierungskomponente eine Redundanzprüfung
benutzt, um Änderungen an den Daten zu detektieren.

10. System nach einem der Ansprüche 1 bis 9, wobei die CPU-Schnittstellenkomponente und das Sicherheitssystem mit einer Schnittstelle, die auf einer Leiterplatte mit einem oder mehreren Speicherarrays eingebettet ist, assoziiert ist und/oder durch diese ausgeführt wird.

11. System nach Anspruch 10, wobei die CPU-Schnittstellenkomponente und das Sicherheitssystem durch eine Schnittstelle ausgeführt werden, die ein oder mehrere Speichermodule aufnimmt und steuert.

12. System nach Anspruch 11, wobei die Schnittstelle einen Mikroprozessor umfasst.

13. System nach Anspruch 11 oder 12, wobei die Schnittstelle eine Speicherkomponente umfasst, die die Ausführung von Sicherheitsprotokollen ermöglicht.

14. System nach einem der Ansprüche 10 bis 13, wobei die Schnittstelle mit diskreter Logik implementiert ist.

15. System nach einem der Ansprüche 10 bis 14, wobei die Schnittstelle mit Technologie des SoC bzw. System on Chip implementiert ist.

## Revendications

1. Système à mémoire volatile sécurisé, comprenant :
un composant interface CPU (510) conçu pour recevoir d'un processeur central des demandes de lecture/écriture en mémoire vive et y donner suite ;
un système de sécurité (520) qui stocke de façon sécurisée des données dans une mémoire volatile et les extrait de celle-ci en réponse aux demandes reçues par l'entremise du composant interface ; et
un composant interface utilisateur (530) ;
lequel système de sécurité (520) comporte un composant de stockage de données (610) qui fait correspondre des données apparentées à des cellules de mémoire d'une manière non linéaire ; et
lequel composant de stockage de données (610) fait correspondre des données à des cellules de mémoire conformément à une clé de processus et une clé d'utilisateur, la clé de processus étant une clé fournie par une CPU et un système d'exploitation par l'entremise du composant interface CPU, ladite clé de processus étant associée à un contexte de processus, et ladite clé d'utilisateur étant une clé fournie par un utilisateur par l'entremise du composant interface utilisateur (530).

2. Système selon la revendication 1, les données apparentées étant stockées dans des cellules de mémoire non contiguës.

3. Système selon la revendication 2, lequel composant de stockage de données (610) comporte un générateur d'emplacements de données qui génère des emplacements pseudo-aléatoires pour stocker les données apparentées.

4. Système selon l'une des revendications 1 à 3, lequel système de sécurité (520) comporte un composant de chiffrement (620) qui chiffre les données enregistrées dans une ou plusieurs cellules de mémoire et qui déchiffre les données lues dans une ou plusieurs cellules de mémoire.

5. Système selon la revendication 4, lequel composant de chiffrement (620) chiffre et déchiffre les données au moyen d'une clé fournie par un utilisateur.

6. Système selon la revendication 5, laquelle clé est fournie par une carte à puce.

7. Système selon la revendication 4 ou 5, lequel système de sécurité comporte en outre un composant d'authentification qui vérifie que les données stockées dans la mémoire n'ont pas été modifiées entre le moment où elles ont été stockées dans la mémoire et le moment où elle ont été lues.

8. Système selon la revendication 7, lequel composant d'authentification fait appel à une fonction de hachage pour détecter des modifications apportées aux données.

9. Système selon la revendication 8, lequel composant d'authentification utilise un contrôle par redondance pour détecter des modifications apportées aux données.

10. Système selon l'une des revendications 1 à 9, lesquels composant interface CPU et système de sécurité sont associés à, et/ou exécutés par, une interface intégrée sur une carte de circuits imprimés comportant une ou plusieurs matrices de mémoire.

11. Système selon la revendication 10, lesquels composant interface CPU et système de sécurité sont exécutés par une interface qui reçoit et commande un ou plusieurs modules de mémoire.

12. Système selon la revendication 11, laquelle interface comporte un microprocesseur.

13. Système selon la revendication 11 ou 12, laquelle interface comporte un composant de mémoire qui facilite l'exécution de protocoles de sécurité.

14. Système selon l'une des revendications 10 à 13, laquelle interface est mise en oeuvre par une logique discrète.

15. Système selon l'une des revendications 10 à 14, laquelle interface est mise en oeuvre par la technologie SoC (Système sur Puce).
